# EUROPEAN PATENT APPLICATION

(11) **EP 4 769 151 A1**
(43) Date of publication of application: **01.07.2026**
(21) Application number: 25772878.2
(22) Date of filing: 04.03.2025
(51) Int. Cl.: G06F 11/07

(54) **VEHICLE CONTROL METHOD AND DEVICE, COMPUTER-READABLE STORAGE MEDIUM, AND CENTRAL COMPUTING PLATFORM**

(30) Priority: 22.03.2024 CN 202410336226; 22.03.2024 CN 202410336227
(71) Applicant: Zhejiang Zeekr Intelligent Technology Co., Ltd., Ningbo, Zhejiang 315899 (CN); Zhejiang Geely Holding Group Co., Ltd., Hangzhou, Zhejiang 310000 (CN)
(72) Inventor: ZHOU, Ziwei, Ningbo, Zhejiang 315899 (CN)
(74) Representative: Elzaburu S.L.P.
(86) International application number: PCT/CN2025/080542
(87) International publication number: WO 2025/195170

(57) **Abstract**

The present application discloses a vehicle control method and device, a computer-readable storage medium, and a central computing platform. The vehicle control method includes the following steps: after receiving a start instruction, acquiring a current power mode and historical vehicle data of a target vehicle, where the historical vehicle data includes a historical power mode of a last power-off; determining whether the current power mode and the historical power mode are idle power modes, where the idle power mode is a power mode entered after executing a preset normal power-off process; and controlling the target vehicle to start in response to that both the current power mode and the historical power mode are the idle power modes.

## Description

### CROSS-REFERENCE TO RELATED APPLICATIONS

The present application claims priority to Chinese Patent Application No. 202410336226.2, filed on March 22, 2024 and Chinese Patent Application No. 202410336227.7, filed on March 22, 2024, the entire contents of which are incorporated herein by reference.

### TECHNICAL FIELD

The present application relates to the technical field of vehicles, and in particular to a vehicle control method, a vehicle control device, a computer-readable storage medium and a central computing platform.

### BACKGROUND

The pursuit of vehicle intellectualization has become a theme of the times, and the whole vehicle system is facing an increasingly complex environment. The vehicle may be subject to interference from numerous external factors during driving, such as harsh environments, complex road conditions and pedestrians who violate traffic rules, and the vehicle may break down after being subject to such interference.

For vehicle safety, the software and hardware of the vehicle are usually self-tested before starting at present, and the vehicle is directly started after the self-test is completed. However, if a fault affecting safe driving occurs in the vehicle in the last driving cycle and the fault fails to be located in the self-test before starting, the driving safety in the subsequent driving cycle is likely to be affected. That is, the existing vehicle control method has the problem of low driving safety.

### SUMMARY

The main purpose of the present application is to provide a vehicle control method, aiming to solve the technical problem of low driving safety in the existing vehicle control method.

To achieve the above purpose, in a first aspect, the present application provides a vehicle control method applied to a vehicle control device, the vehicle control method including:
after receiving a start instruction, acquiring a current power mode and historical vehicle data of a target vehicle, where the historical vehicle data includes a historical power mode of a last power-off;
determining whether the current power mode and the historical power mode are idle power modes, where the idle power mode is a power mode entered after executing a preset normal power-off process; and
controlling the target vehicle to start in response to that both the current power mode and the historical power mode are the idle power modes.

According to the first aspect, after the step of determining whether the current power mode and the historical power mode are the idle power modes, the method includes:
performing fault diagnosis according to the historical vehicle data to obtain fault information of vehicle faults in response to that the historical power mode is not the idle power mode; and
outputting corresponding prompt information according to the fault information.

According to the first aspect, or any implementation manner of the above first aspect, before the step of performing fault diagnosis according to the historical vehicle data to obtain fault information of vehicle faults, the method includes:
acquiring historical check data of the historical vehicle data; and
verifying the historical check data based on a preset check algorithm, and executing the step of performing fault diagnosis according to the historical vehicle data to obtain fault information of vehicle faults after the verification is passed.

According to the first aspect, or any implementation manner of the above first aspect, after the step of performing fault diagnosis according to the historical vehicle data to obtain fault information of vehicle faults, the method includes:
determining whether the vehicle faults affect a driving safety of the target vehicle according to the fault information; and
controlling the target vehicle to cancel starting in response to that the vehicle faults affect the driving safety of the target vehicle.

According to the first aspect, or any implementation manner of the above first aspect, after the step of controlling the target vehicle to start, the method includes:
in response to a vehicle control request, controlling the target vehicle to perform power mode conversion and recording corresponding mode conversion data;
monitoring a vehicle state of the target vehicle during driving, and collecting fault-related data of the target vehicle in response to that the vehicle state is abnormal with faults; and
taking the mode conversion data and the fault-related data as current vehicle data of a current driving cycle.

According to the first aspect, or any implementation manner of the above first aspect, the step of in response to the vehicle control request, controlling the target vehicle to perform power mode conversion and recording corresponding mode conversion data includes:
controlling the target vehicle to convert from a driving power mode to a normal power mode after receiving a stop request;
controlling the target vehicle to convert from the normal power mode to the idle power mode to enter a parking state after receiving a parking request, and recording a real-time power mode of the target vehicle and parking state data in the parking state; and
taking the real-time power mode of the target vehicle and the parking state data as the mode conversion data.

According to the first aspect, or any implementation manner of the above first aspect, before the step of taking the real-time power mode of the target vehicle and the parking state data as the mode conversion data, the method includes:
processing the parking state data based on a preset check algorithm to obtain check data, and appending the check data after the parking state data; and
taking the real-time power mode of the target vehicle and the parking state data appended with the check data as the mode conversion data.

According to the first aspect, or any implementation manner of the above first aspect, before the step of controlling the target vehicle to start, the method includes:
performing a self-test on the target vehicle to obtain a vehicle self-test result; and
executing the step of controlling the target vehicle to start in response to that the vehicle self-test result is passed.

In a second aspect, the present application provides a central computing platform, including a micro controller unit, a power management chip and a memory;
the power management chip is electrically connected to the micro controller unit; and
the power management chip and the micro controller unit are respectively electrically connected to a unidirectional logic device, the unidirectional logic device is connected to the memory, and the unidirectional logic device is configured to prevent a reset signal of the memory from being transmitted to the power management chip and the micro controller unit.

According to the second aspect, or any implementation manner of the above second aspect, the power management chip includes a watchdog module and a first reset module;
the watchdog module is configured to monitor a program flow of the micro controller unit; and
the first reset module is configured to send the reset signal to the micro controller unit and the memory in response to that the program flow of the micro controller unit is abnormal.

According to the second aspect, or any implementation manner of the above second aspect, the micro controller unit includes a fault collection and control module, and the power management chip includes a fault monitoring module;
the fault monitoring module is configured to monitor a fault signal output by the fault collection and control module; and
the first reset module is further configured to send the reset signal to the micro controller unit in response to that the fault signal is abnormal.

According to the second aspect, or any implementation manner of the above second aspect, the power management chip includes a first power supply, a second power supply and an output power monitoring module;
the first power supply is electrically connected to the micro controller unit, and the second power supply is electrically connected to the memory;
the output power monitoring module is configured to monitor voltage states of the first power supply and the second power supply; and
the first reset module is further configured to perform a reset operation on the power management chip in response to that the voltage states are abnormal.

According to the second aspect, or any implementation manner of the above second aspect, the power management chip includes a first self-test module;
the first self-test module is configured to perform fault diagnosis on a first internal function module of the power management chip; and
the first reset module is further configured to perform a reset operation on the power management chip in response to that the first internal function module is faulty.

According to the second aspect, or any implementation manner of the above second aspect, the micro controller unit includes a cyclic redundancy check module and a second reset module, and the memory includes a memory cyclic redundancy check module;
the memory cyclic redundancy check module is configured to perform cyclic redundancy check encoding on to-be-transmitted data of the memory to generate a redundancy code, append the redundancy code after the to-be-transmitted data, and transmit to the micro controller unit;
the cyclic redundancy check module is configured to verify the redundancy code of the to-be-transmitted data; and
the second reset module is configured to send the reset signal to the memory to enable the memory to perform a reset operation in response to that the verification of the redundancy code is abnormal.

According to the second aspect, or any implementation manner of the above second aspect, the micro controller unit includes a second self-test module;
the second self-test module is configured to perform fault diagnosis on a second internal function module of the micro controller unit; and
the second reset module is further configured to perform a reset operation on a faulty second internal function module in response to that the second internal function module is faulty.

According to the second aspect, or any implementation manner of the above second aspect, the memory includes an error notification module;
the error notification module is configured to identify an internal fault of the memory, and notify the micro controller unit of the identified internal fault after the memory receives a periodic polling from the micro controller unit; and
the second reset module is further configured to send the reset signal to the memory after receiving the internal fault notified by the error notification module.

According to the second aspect, or any implementation manner of the above second aspect, the micro controller unit includes an error identification module;
the error identification module is configured to determine whether the internal fault of the memory affects a target safety level, and notify the power management chip to perform a power restart on the memory in response to that the internal fault does not affect the target safety level; and
the second reset module is further configured to send the reset signal to the memory to enable the memory to enter a safe state in response to that the internal fault affects the target safety level.

According to the second aspect, or any implementation manner of the above second aspect, the memory further includes an error code correction module; and
the error code correction module is configured to perform error code detection and correction on received data and transmitted data of the memory.

In a third aspect, the present application provides a vehicle control device, including a memory and a processor, the memory stores a computer program runnable on the processor, and the computer program, when executed by the processor, implements the steps of the vehicle control method as described above when executed.

In a fourth aspect, the present application provides a computer-readable storage medium storing a computer program, and the computer program, when executed by a processor, implements the vehicle control method as described above.

The present application provides a vehicle control method, a device and a computer-readable storage medium. After receiving a start instruction, the current power mode and historical vehicle data of the target vehicle are acquired, where the historical vehicle data includes the historical power mode of the last power-off. It is determined whether the current power mode and the historical power mode are an idle power mode, where the idle power mode is a power mode entered after executing a preset normal power-off process; and the target vehicle is controlled to start if both the current power mode and the historical power mode are the idle power mode. The present application determines whether the target vehicle has executed the preset normal power-off process in the last driving cycle by distinguishing the current power mode of the target vehicle and the historical power mode of the last power-off. If the historical power mode is not the idle power mode, it indicates that an abnormality occurred in the last driving cycle and the power-off was not completed according to the preset normal power-off process. If the current power mode is not the idle power mode, it indicates that an abnormality occurred in the current driving cycle and the idle power mode failed to be entered correctly. Further, the present application controls the target vehicle to start only when both the current power mode and the historical power mode are the idle power modes. Therefore, the present application can avoid potential safety hazards caused by an abnormality in the last driving cycle that fails to be detected in the current driving cycle, and effectively improve the driving safety of the vehicle.

### BRIEF DESCRIPTION OF THE DRAWINGS

FIG. 1 is a schematic flow chart of a vehicle control method according to a first embodiment of the present application.
FIG. 2 is a schematic flow chart of the vehicle control method according to a second embodiment of the present application.
FIG. 3 is a schematic flow chart of the vehicle control method according to a third embodiment of the present application.
FIG. 4 is a schematic diagram of a storage scenario of current vehicle data involved in embodiments of the present application.
FIG. 5 is a schematic device structure diagram of a hardware operating environment involved in embodiments of the present application.
FIG. 6 is a schematic structural diagram of a central computing platform according to a first embodiment of the present application.
FIG. 7 is a schematic structural diagram of the central computing platform according to a second embodiment of the present application.
FIG. 8 is a schematic structural diagram of the central computing platform according to a third embodiment of the present application.
FIG. 9 is a schematic structural diagram of the central computing platform according to a fourth embodiment of the present application.
FIG. 10 is a schematic structural diagram of the central computing platform according to a fifth embodiment of the present application.
FIG. 11 is a schematic application scenario diagram of the central computing platform of the present application.

The realization of the objectives, functional features and advantages of the present application will be further described with reference to the embodiments and the accompanying drawings.

### DETAILED DESCRIPTION OF THE EMBODIMENTS

The technical solutions in the embodiments of the present application will be clearly and completely described below with reference to the accompanying drawings in the embodiments of the present application. Obviously, the described embodiments are some rather than all of the embodiments of the present application. All other embodiments obtained by those skilled in the art without creative efforts based on the embodiments of the present application shall fall within the scope of the present application.

The term "and/or" in the present application merely describes an association relationship between associated objects, indicating that three relationships may exist. For example, A and/or B may indicate: A, A and B, and B.

The terms "first" and "second" in the specification and claims of the embodiments of the present application are used to distinguish different objects, rather than to describe a specific order of the objects. For example, a first target object and a second target object are used to distinguish different target objects, rather than to describe a specific order of the target objects.

In the embodiments of the present application, the words "exemplary" or "for example" are used to serve as an example, illustration or explanation. Any embodiment or design scheme described as "exemplary" or "for example" in the embodiments of the present application shall not be interpreted as being more preferred or having more advantages than other embodiments or design schemes. Specifically, the use of the words "exemplary" or "for example" is intended to present relevant concepts in a specific manner.

It should be understood that the specific embodiments described herein are merely used to explain the present application and are not intended to limit the present application.

To elaborate the technical solution of the present application more clearly, the present application is described below in combination with some prior art.

The pursuit of vehicle intellectualization has become a theme of the times, and the whole vehicle system is facing an increasingly complex environment. The vehicle may be subject to interference from numerous external factors during driving, such as harsh environments, complex road conditions and pedestrians who violate traffic rules, and the vehicle may break down after being subject to such interference.

For vehicle safety, the software and hardware of the vehicle are usually self-tested before starting at present, and the vehicle is directly started after the self-test is completed. In the past, there was a lack of awareness of checking the concept of power mode before vehicle starting. However, if a fault affecting safe driving occurs in the vehicle in the last driving cycle and the fault fails to be located in the self-test before starting, the driving safety in the subsequent driving cycle is likely to be affected. That is, the existing vehicle control method has the problem of low driving safety.

The present application determines whether the target vehicle has executed the preset normal power-off process in the last driving cycle by distinguishing the current power mode of the target vehicle and the historical power mode of the last power-off. If the historical power mode is not the idle power mode, it indicates that an abnormality occurred in the last driving cycle and the power-off was not completed according to the preset normal power-off process. If the current power mode is not the idle power mode, it indicates that an abnormality occurred in the current driving cycle and the idle power mode failed to be entered correctly. Further, the present application controls the target vehicle to start only when both the current power mode and the historical power mode are the idle power mode. Therefore, the present application can avoid potential safety hazards caused by an abnormality in the last driving cycle that fails to be detected in the current driving cycle, and effectively improve the driving safety of the vehicle.

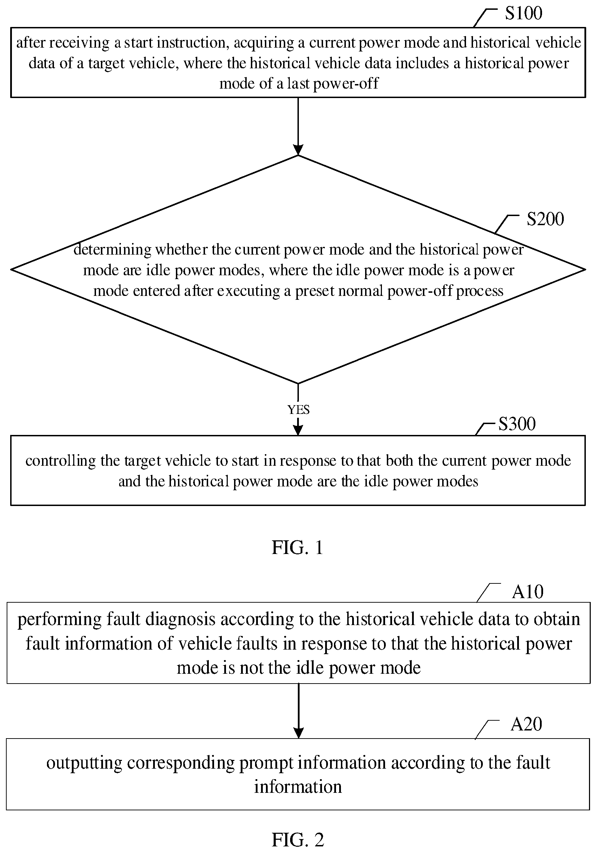

Please refer to FIG. 1, which is a schematic flow chart of a vehicle control method according to a first embodiment of the present application. Although a logical order is shown in the flow chart, in some cases, the steps shown or described may be executed in an order different from that herein.

A first embodiment of the present application provides a vehicle control method, including the following steps:
Step S100: after receiving a start instruction, acquiring a current power mode and historical vehicle data of a target vehicle, where the historical vehicle data comprises a historical power mode of a last power-off.

In this embodiment, the start instruction is an instruction indicating the target vehicle to start, and the start instruction may be issued by a driver by pressing a start button in the vehicle, or issuing an instruction via the Internet of Vehicles through an application program, and other manners. The target vehicle is a pure electric vehicle or an extended-range vehicle driven by electric energy.

In this embodiment, the historical vehicle data at least includes the vehicle data of the target vehicle in the last driving cycle, and may include the historical power mode of the last power-off of the target vehicle, the mode conversion data of the last driving cycle (i.e., the vehicle operation data when the target vehicle performs power mode conversion), fault-related data (such as fault codes, vehicle operation data when a fault occurs), message data and other data. The current power mode is the power mode in which the target vehicle is currently located, and the historical power mode is the power mode in which the target vehicle is located when the power is off in the last driving cycle. The power mode is a power supply mode of the target vehicle in different driving states. For example, if the target vehicle is in a state where the vehicle is not started or after executing a preset normal power-off process, the power mode is the idle power mode. If the target vehicle is in a state where the preparation before vehicle starting is completed or the vehicle is ready for parking, the power mode is the normal power mode. If the target vehicle is in a state of normal driving, the power mode is the driving power mode.

In this embodiment, in the last driving cycle, the target vehicle is controlled to perform power mode conversion in response to a historical driving request input by a driver, and corresponding historical mode conversion data is recorded. Further, the historical vehicle state of the target vehicle during driving in the last driving cycle is monitored, and historical fault data of the target vehicle is collected when the historical vehicle state is abnormal with faults. The historical mode conversion data and the historical fault data are taken as historical vehicle data. The historical mode conversion data at least includes the power mode of the target vehicle after mode conversion in the last driving cycle, and may certainly include vehicle data during the conversion process. Therefore, in the current driving cycle of this embodiment, the historical power mode of the last power-off of the target vehicle can be obtained by reading the historical vehicle data recorded in the last driving cycle. The current power mode of the target vehicle is obtained by querying the power mode of the target vehicle.

Step S200: determining whether the current power mode and the historical power mode are idle power modes, where the idle power mode is a power mode entered after executing a preset normal power-off process.

In this embodiment, the idle power mode is a power mode entered after executing a preset normal power-off process. The preset normal power-off process is a preset normal power-off procedure of the target vehicle.

This embodiment determines whether the current power mode and the historical power mode are the idle power mode (the idle power mode is a power mode entered after executing a preset normal power-off process), so as to determine whether an abnormality occurred in the last driving cycle resulting in the target vehicle failing to complete the power-off according to the normal power-off process, and whether an initialization operation (i.e., an operation of restoring the circuit of the target vehicle to an initial state) of the target vehicle before starting is abnormal. If the current power mode is not the idle power mode, it indicates that the initialization operation of the target vehicle before starting may be abnormal. If the historical power mode is not the idle power mode, it indicates that an abnormality occurred in the last driving cycle resulting in the target vehicle failing to complete the power-off according to the normal power-off process, such as an abnormal power-off of the vehicle caused by the failure of relevant electrical components, control software faults and other reasons.

Step S300: controlling the target vehicle to start in response to that both the current power mode and the historical power mode are the idle power modes.

In this embodiment, if both the current power mode and the historical power mode are the idle power mode, it indicates that the target vehicle completed the power-off according to the normal power-off process in the last driving cycle, and the initialization operation of the target vehicle before starting is normally performed, then the target vehicle can be controlled to start. If the historical power mode is not the idle power mode, it indicates that the target vehicle failed to complete the power-off according to the normal power-off process in the last driving cycle. If the current power mode is not the idle power mode, it indicates that the initialization operation of the target vehicle before starting is abnormal. If either the current power mode or the historical power mode is not the idle power mode, the starting of the target vehicle may be canceled. Further, if the current power mode is not the idle power mode, the initialization may be performed on the target vehicle again, and the step of acquiring the current power mode and historical vehicle data of the target vehicle is executed after the re-initialization is completed.

In some embodiments, before the step of controlling the target vehicle to start in step S300, the method includes:
Step S310: performing a self-test on the target vehicle to obtain a vehicle self-test result; and
Step S320: executing the step of controlling the target vehicle to start in response to that the vehicle self-test result is passed.

In this embodiment, the self-test is an operation of detecting the states of designated components of the target vehicle (i.e., software and hardware that need to be detected as designated in advance). For example, if the states of the designated components are all normal states, the vehicle self-test result is a passed self-test; and if the states of the designated components are not all normal states, the vehicle self-test result is a failed self-test.

In this embodiment, before controlling the target vehicle to start, the self-test is further performed on the target vehicle to obtain a vehicle self-test result. The step of controlling the target vehicle to start is executed if the vehicle self-test result is a passed self-test. If the vehicle self-test result is a failed self-test, it indicates that the software and/or hardware of the target vehicle may be abnormal, and then the target vehicle is controlled to cancel starting. Therefore, the present application avoids the impact on the safe driving of the target vehicle caused by the abnormality of the software and/or hardware of the target vehicle in the current driving cycle.

In the first embodiment of the present application, after receiving a start instruction, the current power mode and historical vehicle data of the target vehicle are acquired, where the historical vehicle data includes the historical power mode of the last power-off. It is determined whether the current power mode and the historical power mode are an idle power mode, where the idle power mode is a power mode entered after executing a preset normal power-off process; and the target vehicle is controlled to start if both the current power mode and the historical power mode are the idle power mode. This embodiment determines whether the target vehicle has executed the preset normal power-off process in the last driving cycle by distinguishing the current power mode of the target vehicle and the historical power mode of the last power-off. If the historical power mode is not the idle power mode, it indicates that an abnormality occurred in the last driving cycle and the power-off was not completed according to the preset normal power-off process. If the current power mode is not the idle power mode, it indicates that an abnormality occurred in the current driving cycle and the idle power mode failed to be entered correctly. Further, this embodiment controls the target vehicle to start only when both the current power mode and the historical power mode are the idle power mode. Therefore, this embodiment can avoid potential safety hazards caused by an abnormality in the last driving cycle that fails to be detected in the current driving cycle, and effectively improve the driving safety of the vehicle.

Refer to FIG. 2, which is a schematic flow chart of the vehicle control method according to a second embodiment of the present application.

In another embodiment of the present application, for the content the same as or similar to the above embodiment, reference may be made to the above description, and details are not described hereinafter. A second embodiment of the present application provides a vehicle control method, after the step of determining whether the current power mode and the historical power mode are the idle power modes in step S200, the method includes:
Step A10: performing fault diagnosis according to the historical vehicle data to obtain fault information of vehicle faults in response to that the historical power mode is not the idle power mode; and
Step A20: outputting corresponding prompt information according to the fault information.

In this embodiment, the historical vehicle data is the vehicle data of the target vehicle in the last driving cycle, and may include the historical power mode of the last power-off, the mode conversion data of the last driving cycle (i.e., the vehicle operation data when the target vehicle performs power mode conversion), fault-related data (such as fault codes, vehicle operation data when a fault occurs), message data and other data.

In this embodiment, if the historical power mode is not the idle power mode, it indicates that the target vehicle failed to complete the power-off according to the normal power-off process in the last driving cycle, then fault diagnosis may be performed according to the historical vehicle data to obtain fault information of vehicle faults, where the fault information may include fault codes and may also include vehicle fault events referred to by the fault codes. Further, corresponding prompt information is output according to the fault information to prompt the driver of the vehicle fault occurring in the target vehicle in the last driving cycle. The prompt information is information for prompting the fault information in at least one form of characters, patterns and voice, such as displaying fault codes and performing voice prompt.

In some embodiments, before the step of performing fault diagnosis according to the historical vehicle data to obtain fault information of vehicle faults in step A20, the method includes:
Step B10: acquiring historical check data of the historical vehicle data; and
Step B20: verifying the historical check data based on a preset check algorithm, and executing the step of performing fault diagnosis according to the historical vehicle data to obtain fault information of vehicle faults after the verification is passed.

In this embodiment, the preset check algorithm is a preset algorithm for error checking and verification of vehicle data, such as a cyclic redundancy check (CRC) algorithm, a Hamming code algorithm, a parity check algorithm. The historical check data is data obtained by processing the historical vehicle data through the preset check algorithm.

This embodiment acquires the historical check data of the historical vehicle data; verifies the historical check data based on a preset check algorithm, and executes the step of performing fault diagnosis according to the historical vehicle data to obtain fault information of vehicle faults after the verification is passed. If the verification fails, the historical vehicle data is acquired again. Therefore, this embodiment ensures the integrity and accuracy of the historical vehicle data by means of the preset check algorithm, avoids misdiagnosis in the subsequent fault diagnosis process, and improves the accuracy of the fault information of vehicle faults.

In some embodiments, after the step of performing fault diagnosis according to the historical vehicle data to obtain fault information of vehicle faults in step A20, the method includes:
Step C10: determining whether the vehicle faults affect a driving safety of the target vehicle according to the fault information; and
Step C20: controlling the target vehicle to cancel starting in response to that the vehicle faults affect the driving safety of the target vehicle.

In this embodiment, the fault information at least includes the fault code of the vehicle fault.

This embodiment may determine whether the fault code is within a preset fault range according to the fault code in the fault information, so as to determine whether the vehicle fault affects the driving safety of the target vehicle. The preset fault range is a preset set of fault codes that affect the driving safety of the target vehicle. If the fault code is within the preset fault range, it is determined that the vehicle fault affects the driving safety of the target vehicle. If the fault code is not within the preset fault range, it is determined that the vehicle fault does not affect the driving safety of the target vehicle. If the vehicle fault affects the driving safety of the target vehicle, the target vehicle is controlled to cancel starting. If the vehicle fault affects the driving safety of the target vehicle, the target vehicle may be controlled to start, or a start inquiry request about the vehicle fault may be output to the driver, and the target vehicle is controlled to start after receiving a start confirmation instruction from the driver for the start inquiry request. The start inquiry request includes the vehicle fault and a request for inquiring whether to start the vehicle. Therefore, this embodiment controls the target vehicle to cancel starting when the vehicle fault affects the driving safety of the target vehicle, and effectively improves the driving safety of the vehicle.

In the second embodiment of the present application, fault diagnosis is performed according to the historical vehicle data to obtain fault information of vehicle faults if the historical power mode is not the idle power mode; and corresponding prompt information is output according to the fault information. Therefore, in the scenario where an abnormality occurred in the last driving cycle and the power-off was not completed according to the preset normal power-off process, this embodiment performs fault diagnosis on the historical vehicle data to identify the vehicle fault existing in the last driving cycle and prompt the driver, effectively improving the driving safety of the vehicle.

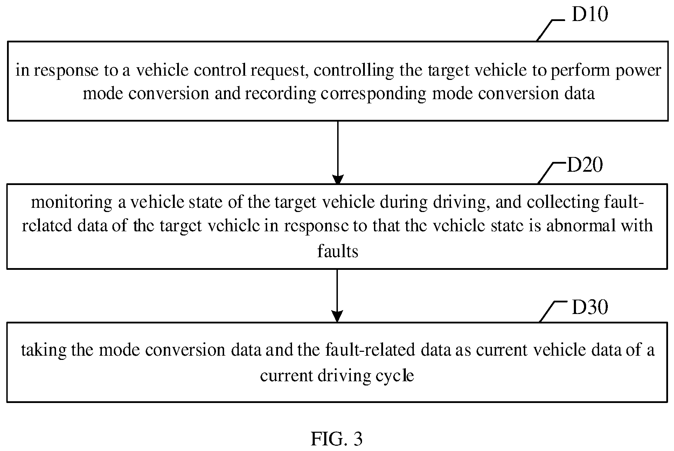

Refer to FIG. 3, which is a schematic flow chart of the vehicle control method according to a third embodiment of the present application.

In another embodiment of the present application, for the content the same as or similar to the above embodiment, reference may be made to the above description, and details are not described hereinafter. A third embodiment of the present application provides a vehicle control method, after the step of controlling the target vehicle to start in step S300, the method includes:
Step D10: in response to a vehicle control request, controlling the target vehicle to perform power mode conversion and recording corresponding mode conversion data;
Step D20: monitoring a vehicle state of the target vehicle during driving, and collecting fault-related data of the target vehicle in response to that the vehicle state is abnormal with faults;
Step D30: taking the mode conversion data and the fault-related data as current vehicle data of a current driving cycle.

In this embodiment, the vehicle control request is a request instruction for the driver to control the vehicle, such as a vehicle driving request, a stop request, a parking request.

In this embodiment, after receiving a vehicle control request input by the driver, the target vehicle is controlled to perform power mode conversion to convert the current power mode of the target vehicle to a power mode matching the vehicle control request. At this time, corresponding mode conversion data, i.e., the vehicle operation data when the target vehicle performs power mode conversion, may be recorded. Therefore, data can be provided for fault diagnosis in the next driving cycle to accurately identify vehicle faults caused by abnormalities occurring in the power mode conversion process. As an example, for a power-on operation scenario, this embodiment may control the target vehicle to convert from the idle power mode to the normal power mode after receiving a start instruction and both the current power mode and the historical power mode are the idle power mode, and record first conversion data, where the first conversion data includes a real-time power mode (i.e., the normal power mode) and vehicle operation data during the conversion from the idle power mode to the normal power mode; control the target vehicle to convert from the normal power mode to the driving power mode after receiving a vehicle driving instruction from the driver, and record second conversion data, where the second conversion data includes a real-time power mode (i.e., the driving power mode) and vehicle operation data during the conversion from the normal power mode to the driving power mode. The first conversion data and the second conversion data are taken as mode conversion data. As another example, for a power-off parking scenario, this embodiment may control the target vehicle to convert from the driving power mode to the normal power mode after receiving a stop request; control the target vehicle to convert from the normal power mode to the idle power mode to enter a parking state after receiving a parking request, and record the real-time power mode of the target vehicle and parking state data in the parking state; and take the real-time power mode of the target vehicle and the parking state data as mode conversion data.

Further, the vehicle state of the target vehicle during driving is monitored, and fault-related data of the target vehicle is collected when the vehicle state is abnormal with faults. If the vehicle state is not abnormal with faults, the fault-related data is empty. Further, this embodiment takes the mode conversion data and the fault-related data as the current vehicle data of the current driving cycle. Therefore, on the one hand, data can be provided for fault diagnosis in the next driving cycle to accurately identify the cause of the abnormal power-off of the target vehicle due to faults occurring in the power mode conversion process and the driving process; on the other hand, the efficiency and accuracy of fault diagnosis in the next driving cycle are improved.

In some embodiments, the step of in response to the vehicle control request, controlling the target vehicle to perform power mode conversion and recording corresponding mode conversion data in step D10 includes:
Step E10: controlling the target vehicle to convert from a driving power mode to a normal power mode after receiving a stop request;
Step E20: controlling the target vehicle to convert from the normal power mode to the idle power mode to enter a parking state after receiving a parking request, and recording a real-time power mode of the target vehicle and parking state data in the parking state; and
Step E30: taking the real-time power mode of the target vehicle and the parking state data as the mode conversion data.

In this embodiment, the mode conversion data may include the real-time power mode of the target vehicle after power mode conversion in the power-off process and vehicle operation data during the conversion process.

In this embodiment, the parking request may be input by the driver, or may be generated automatically when the target vehicle meets a preset parking condition (e.g., the continuous duration in which the real-time vehicle speed is lower than a preset vehicle speed threshold is longer than a preset duration).

This embodiment controls the target vehicle to convert from the driving power mode to the normal power mode after receiving a stop request; controls the target vehicle to convert from the normal power mode to the idle power mode to enter a parking state after receiving a parking request, records the real-time power mode (i.e., the idle power mode) of the target vehicle and parking state data in the parking state; and takes the real-time power mode of the target vehicle and the parking state data as mode conversion data. This embodiment records the real-time power mode (i.e., the idle power mode) of the target vehicle while the target vehicle converts from the normal power mode to the idle power mode to enter the parking state, so that the mode conversion data can be read in the next driving cycle to obtain the real-time power mode when the power is off in the current driving cycle, which provides a basis for determining whether the current driving cycle is in accordance with the preset normal power-off process in the next driving cycle, and effectively improves the driving safety of the vehicle.

In some embodiments, before the step of taking the real-time power mode of the target vehicle and the parking state data as the mode conversion data in step E30, the method includes:
Step F10: processing the parking state data based on a preset check algorithm to obtain check data, and appending the check data after the parking state data;
Step F20: taking the real-time power mode of the target vehicle and the parking state data appended with the check data as the mode conversion data.

In this embodiment, the preset check algorithm is a preset algorithm for error checking and verification of vehicle data, such as a cyclic redundancy check (CRC) algorithm, a Hamming code algorithm, a parity check algorithm.

Abnormalities may occur in data during reading, writing and transmission processes, resulting in data loss, errors and other situations. This embodiment processes the parking state data based on a preset check algorithm to obtain check data, and appends the check data to the parking state data; and takes the real-time power mode of the target vehicle and the parking state data appended with the check data as mode conversion data. Taking the preset check algorithm as the CRC algorithm as an example, this embodiment may process the parking state data through the CRC algorithm to obtain a CRC check code, and append the CRC check code to the parking state data. Therefore, this embodiment ensures the integrity and accuracy of the mode conversion data by means of the preset check algorithm.

In the third embodiment of the present application, the target vehicle is controlled to perform power mode conversion in response to a vehicle control request, and corresponding mode conversion data is recorded. The vehicle state of the target vehicle during driving is monitored, and fault-related data of the target vehicle is collected when the vehicle state is abnormal with faults. The mode conversion data and the fault-related data are taken as the current vehicle data of the current driving cycle. Therefore, on the one hand, this embodiment can provide data for fault diagnosis in the next driving cycle to accurately identify the cause of the abnormal power-off of the target vehicle due to faults occurring in the power mode conversion process and the driving process; on the other hand, the efficiency and accuracy of fault diagnosis in the next driving cycle are improved.

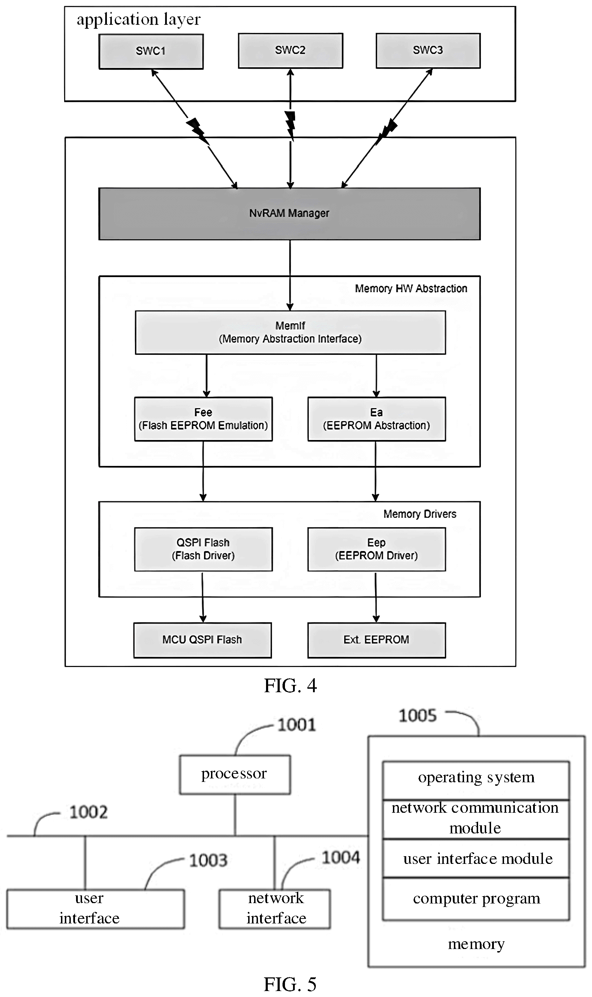

Refer to FIG. 4, which is a schematic diagram of a storage scenario of current vehicle data involved in embodiments of the present application. As shown in FIG. 4, the target vehicle has a storage requirement for current vehicle data when the power mode is switched upon receiving a vehicle control instruction from a driver. This embodiment connects an application layer with a bottom-layer call interface through a basic software service layer NvRAM manager (NVM). In the application layer, software components (SWC) 1, 2 and 3 execute some storage-related data and update diagnosis services. In a memory abstraction interface (MemIf) layer, functions for accessing a Flash EEPROM Emulation (Fee)/EEPROM Abstraction (Ea) module are provided, and functions in the NVM layer are used to call interfaces of Flash emulation and electrically erasable programmable read-Only Memory (EEPROM) in the lower layer of the MemIf according to different requirements of the NVM, i.e., Fee or Ea. If an internal storage write operation of the Fee is selected, a quad serial peripheral interface (QSPI) Flash interface may be used to emulate an EEPROM, and data is written into the QSPI Flash of the micro controller unit (MCU) page by page. Before writing, it is necessary to ensure that the to-be-written storage space has not been written with data, otherwise the data needs to be erased before writing. If an external memory of the Ea is selected, an EEPROM driver (Eep) interface is called, and the EEPROM is operated by accessing an application interface provided by the lower-layer Eep, which can write data byte by byte without performing a data erasure operation before writing. For data storage operations: when the NVM executes a storage operation on the current vehicle data, a call is made through a bottom-layer software shutdown power-off (Shutdown), a storage mode of a corresponding power mode (ShutDown/Powermodestate) is configured in a non-volatile component, a non-volatile storage management module state function (NvM_SetRamBlockStatus) is called to notify a runtime environment (RTE) layer that storage is required during power mode conversion, a middle-layer write function (Rte_Write) is called to set a stored Flag, and a corresponding Evet Flag is set to True. At this time, a change bit is set by activating a corresponding non-volatile storage management module state function (Nvm_SetRamBlockStatus) to perform storage during power-off. When the bottom-layer software BswM executes power-off, a write operation function (NVM_WriteALL) is called to perform power-off storage of all data, completing data write protection.

With the continuous update and iteration of automobile control systems, the pursuit of automobile intellectualization has become a theme of the times, the whole vehicle system is facing an increasingly complex environment, and the reliability requirements for the whole vehicle system are also getting higher and higher to meet the functional safety requirements of vehicles.

A central computing platform currently plays the role of a central brain of the whole vehicle in a centralized electronic and electrical architecture, and the central computing platform includes related functions such as an intelligent cockpit, automatic driving, vehicle control and an intelligent gateway.

However, due to production processes and other reasons, the storage unit in the current central computing platform only supports up to automotive safety integrity level (ASIL) B at the maximum, which is difficult to meet higher safety objectives. Therefore, the current central computing platform is difficult to meet the safety objectives of higher automotive safety integrity levels.

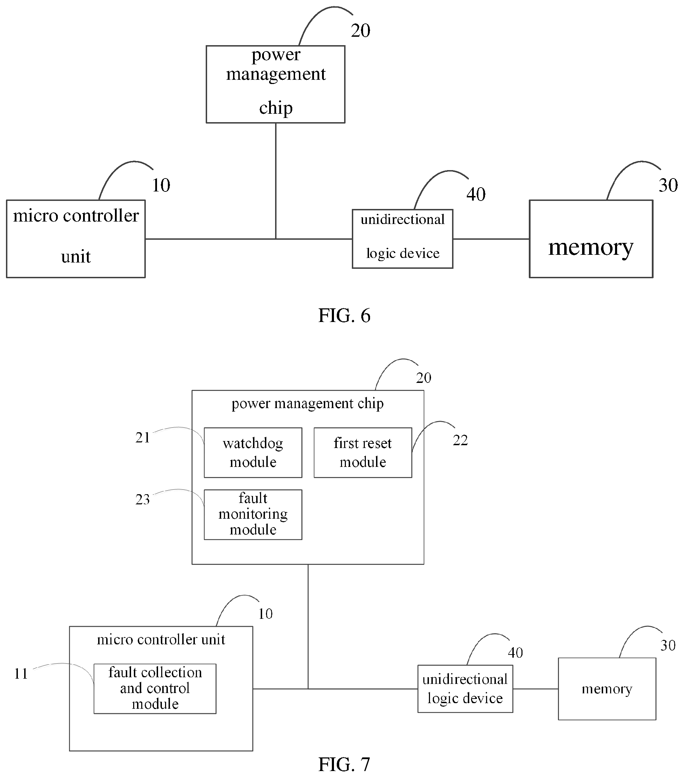

Please refer to FIG. 6, which is a schematic structural diagram of a central computing platform according to a first embodiment of the present application. Although the device structure of the central computing platform is shown in FIG. 6, in some cases, it may include more or fewer components than those shown, or some components may be combined, or different component arrangements may be adopted.

A first embodiment of the present application provides a central computing platform, including a micro controller unit 10, a power management chip 20 and a memory 30.

The power management chip 20 is electrically connected to the micro controller unit 10; and

the power management chip 20 and the micro controller unit 10 are respectively electrically connected to a unidirectional logic device 40, and the unidirectional logic device 40 is connected to the memory 30, where the unidirectional logic device 40 is configured to prevent a reset signal of the memory 30 from being transmitted to the power management chip 20 and the micro controller unit 10.

In this embodiment, the central computing platform is a platform that acts as a central hub of the whole vehicle to realize vehicle functional applications in a centralized electronic and electrical architecture of a vehicle, such as a vehicle control unit (VCU).

For example, the micro controller unit 10 and the power management chip 20 may conform to a target safety level, and the memory 30 conforms to a selected safety level, where the selected safety level is lower than the target safety level. The target safety level is the automotive safety integrity level that the central computing platform is expected to conform to, such as ASIL D, ASIL C. The selected safety level is the automotive safety integrity level that the selected memory 30 conforms to, such as ASIL B, ASIL A. The unidirectional logic device may be a fixed logic device or a programmable logic device, configured to realize unidirectional transmission of a reset signal, thereby preventing the reset signal of the memory 30 from being transmitted to the power management chip 20 and the micro controller unit 10 and avoiding triggering a reset operation on the power management chip 20 and the micro controller unit 10. The reset operation is an operation of restoring a circuit to an initial state.

In this embodiment, the micro controller unit 10 is configured to perform reset operations on the power management chip 20 and the memory 30. The micro controller unit 10 may include internal function modules such as a lockstep core module, a clock monitoring module, an error alarm module, a fault collection module, a memory protection module, a self-test control module, a reset generation module, an interrupt control module, a cyclic redundancy check module, an error code correction module, a parity check module, a fault injection module, a register protection module, a power management module, a software watchdog module and a storage partition module. The power management chip 20 is configured to supply power to the micro controller unit 10 and the memory 30, and perform reset operations on the micro controller unit 10 and the memory 30. The power management chip 20 may include internal function modules such as a watchdog monitoring module (with time window function), a communication module, an interrupt control module, an output power monitoring module, a self-test control module, a fault monitoring module, a Fail-Safe (enter a safe state after a fault) module and a reset generation module. The memory 30 may be a high-speed random access memory (RAM) or a stable non-volatile memory (NVM). Since current vehicles have high real-time requirements for data in terms of automatic driving, vehicle control and other aspects, and the data volume is huge, the memory 30 may preferably adopt quad serial peripheral interface (QSPI) Flash, and the QSPI standard achieves fast data exchange by introducing a higher clock frequency and multi-channel transmission. The memory 30 may include internal function modules such as a power-on initialization configuration module, an error code correction module, a memory cyclic redundancy check module, a fault injection verification cyclic redundancy check module, an error notification module, a reset generation module, a sector protection module and a secure memory storage module.

The central computing platform in this embodiment includes the micro controller unit 10, the power management chip 20 and the memory 30, where the micro controller unit 10 and the power management chip 20 comply with the target safety level, and the memory 30 complies with a selected safety level which is lower than the target safety level. Therefore, to enable the central computing platform as a whole to support the target safety level at the maximum, in the architectural design of the central computing platform in this embodiment, the power management chip 20 is electrically connected to the micro controller unit 10. The power management chip 20 and the micro controller unit 10 are respectively electrically connected to the unidirectional logic device 40, and the unidirectional logic device 40 is connected to the memory 30, where the unidirectional logic device 40 is configured to prevent the reset signal of the memory 30 from being transmitted to the power management chip 20 and the micro controller unit 10. Reset triggering between the power management chip 20 and the micro controller unit 10 is bidirectional, that is, the power management chip 20 and the micro controller unit 10 can perform reset operations on each other. The reset link for the memory 30 is converted to unidirectional transmission after being processed by the unidirectional logic device, so that the power management chip 20 and the micro controller unit 10 can trigger the reset behavior of the memory 30, while the memory 30 cannot trigger the reset behavior of the power management chip 20 and the micro controller unit 10 in return. In this embodiment, by virtue of the power management chip 20 and the micro controller unit 10 that comply with a higher automotive safety integrity level (i.e., the target safety level), a reset operation is performed on the memory 30 that only complies with a lower automotive safety integrity level (i.e., the selected safety level) in preset reset scenarios, so as to avoid abnormalities or faults caused by the memory 30 failing to meet the target safety level. In addition, the unidirectional logic device is used to prevent the reset signal of the memory 30 from being transmitted to the power management chip 20 and the micro controller unit 10 in reverse, thereby enabling the central computing platform as a whole to support the target safety level at the maximum.

In the first embodiment of the present application, a central computing platform is provided, which includes a micro controller unit 10, a power management chip 20 and a memory 30. The power management chip 20 is electrically connected to the micro controller unit 10. The power management chip 20 and the micro controller unit 10 are respectively electrically connected to a unidirectional logic device 40, and the unidirectional logic device 40 is connected to the memory 30, where the unidirectional logic device 40 is configured to prevent the reset signal of the memory 30 from being transmitted to the power management chip 20 and the micro controller unit 10. In this embodiment, by virtue of the power management chip and the micro controller unit, a reset operation is performed on the memory that only complies with a lower automotive safety integrity level in preset reset scenarios, so as to avoid abnormalities or faults caused by the low automotive safety integrity level of the memory. In addition, the unidirectional logic device is used to prevent the reset signal of the memory from being transmitted to the power management chip and the micro controller unit in reverse, thereby enabling the central computing platform as a whole to reach a higher automotive safety integrity level. Therefore, this embodiment solves the technical problem that the current central computing platform is difficult to meet the safety objectives of higher automotive safety integrity levels, and effectively improves the reliability and driving safety of the central computing platform.

Refer to FIG. 7, which is a schematic structural diagram of the central computing platform according to a second embodiment of the present application.

The second embodiment of the present application provides a central computing platform, where the power management chip 20 includes a watchdog module 21 and a first reset module 22.

The watchdog module 21 is configured to monitor the program flow of the micro controller unit 10.

The first reset module 22 is configured to send a reset signal to the micro controller unit 10 and the memory 30 when the program flow of the micro controller unit 10 is abnormal.

In this embodiment, the watchdog module 21 is an internal function module of the power management chip 20 for implementing the watchdog monitoring function, and the watchdog module 21 may be a hardware module or a software module. The first reset module 22 is an internal function module of the power management chip 20 for generating the reset signal.

The watchdog module 21 is configured to monitor the program flow of the micro controller unit 10. When the micro controller unit 10 is working normally, it outputs a signal to the watchdog module 21 to perform a dog feeding operation at preset time intervals, and the watchdog module 21 clears the timer after receiving the signal. If the dog feeding operation is not performed beyond the specified time and the timer times out, it indicates that the program flow of the micro controller unit 10 is abnormal (such as an infinite loop of the program, a program runaway or other abnormal situations). The first reset module 22 will send a reset signal to the micro controller unit 10 and the memory 30 when the program flow of the micro controller unit 10 is abnormal, so as to reset the micro controller unit 10 and the memory 30. This prevents the micro controller unit 10 from crashing on the one hand, and prevents the micro controller unit 10 from incorrectly reading the stored data in the memory 30 when the program flow is abnormal on the other hand.

In some embodiments, the micro controller unit 10 includes a fault collection and control module 11, and the power management chip 20 includes a fault monitoring module 23.

The fault monitoring module 23 is configured to monitor the fault signal output by the fault collection and control module 11.

The first reset module 22 is further configured to send a reset signal to the micro controller unit 10 when the fault signal is abnormal.

In this embodiment, the power management chip 20 and the micro controller unit 10 may be connected by a hard wire or a communication link to realize the fault monitoring of the micro controller unit 10 by the power management chip 20. The hard wire connection between the power management chip 20 and the micro controller unit 10 can improve the fault response speed of the power management chip 20 to the micro controller unit 10. The fault collection and control module 11 is configured to provide a hardware channel to collect faults of the micro controller unit 10 and output corresponding fault signals to the power management chip 20, without the intervention of any processing unit (such as the micro controller unit 10) in the collection and control operations.

The fault collection and control module 11 collects faults of the micro controller unit 10 and outputs a fault signal to the fault monitoring module 23 based on the faults. The fault monitoring module 23 monitors the fault signal output by the fault collection and control module 11, and the first reset module 22 sends a reset signal to the micro controller unit 10 when the fault signal is abnormal (indicating that the micro controller unit 10 is faulty), so as to make the micro controller unit 10 execute a reset operation. This embodiment realizes fault monitoring of the micro controller unit 10 through the power management chip 20, ensures that the micro controller unit 10 can be reset in time when a fault occurs, and effectively improves the reliability of the micro controller unit.

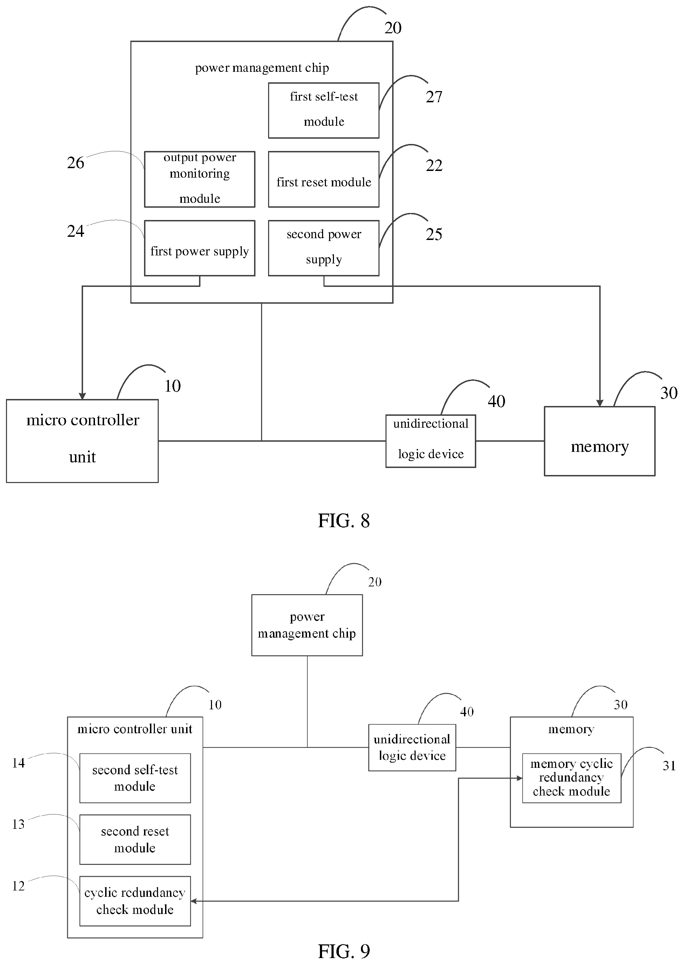

Refer to FIG. 8, which is a schematic structural diagram of the central computing platform according to a second embodiment of the present application.

The third embodiment of the present application provides a central computing platform, where the power management chip 20 includes a first power supply 24, a second power supply 25 and an output power monitoring module 26.

The first power supply 24 is electrically connected to the micro controller unit 10, and the second power supply 25 is electrically connected to the memory 30.

The output power monitoring module 26 is configured to monitor the voltage states of the first power supply 24 and the second power supply 25.

The first reset module 22 is further configured to perform a reset operation on the power management chip 20 when the voltage state is an abnormal state.

In this embodiment, the first power supply 24 and the second power supply 25 are independent power supplies respectively, so that the micro controller unit 10 and the memory 30 are supplied with power independently, so as to avoid that both units are restarted when one unit needs power supply restart. The abnormal states include an undervoltage state (i.e., the output voltage is lower than the preset voltage range) and an overvoltage state (i.e., the output voltage is higher than the preset voltage range).

In this embodiment, the power management chip 20 includes the first power supply 24, the second power supply 25 and the output power monitoring module 26. The first power supply 24 is electrically connected to the micro controller unit 10, and the second power supply 25 is electrically connected to the memory 30, so that the power management chip 20 supplies power to the micro controller unit 10 and the memory 30 independently. The power management chip 20 monitors the voltage states of the first power supply 24 and the second power supply 25 through the output power monitoring module 26, and performs a reset operation on the power management chip 20 through the first reset module 22 when the voltage state is an abnormal state, thereby ensuring the power supply stability for the micro controller unit 10 and the memory 30 and improving the overall reliability of the central computing platform.

In some embodiments, the power management chip 20 includes a first self-test module 27.

The first self-test module 27 is configured to perform fault diagnosis on the first internal function module of the power management chip 20.

The first reset module 22 is further configured to perform a reset operation on the power management chip 20 when the first internal function module is faulty.

In this embodiment, the first internal function module refers to the modules configured inside the power management chip 20 for implementing various functions (such as the watchdog module 21, the fault monitoring module 23, the output power monitoring module 26, etc.).

In this embodiment, the power management chip 20 includes the first self-test module 27, and the power management chip 20 performs fault diagnosis on the first internal function module of the power management chip 20 through the first self-test module 27. Then, when the first internal function module is faulty, the first reset module 22 performs a reset operation on the power management chip 20. This embodiment may also determine whether the fault of the first internal function module affects the target safety level. If the fault of the first internal function module does not affect the target safety level, the first self-test module 27 may send a fault notification to the micro controller unit 10, so that the micro controller unit 10 resets the faulty first internal function module in the power management chip 20, thus eliminating the need to reset the entire power management chip 20. This embodiment performs fault diagnosis on the first internal function module of the power management chip 20 through the first self-test module 27 and resets the module in time when a fault occurs, which ensures the reliability of the functions of the power management chip.

Refer to FIG. 9, which is a schematic structural diagram of the central computing platform according to a fourth embodiment of the present application.

The fourth embodiment of the present application provides a central computing platform, where the micro controller unit 10 includes a cyclic redundancy check module 12 and a second reset module 13, and the memory 30 includes a memory cyclic redundancy check module 31.

The memory cyclic redundancy check module 31 is configured to perform cyclic redundancy check encoding on the to-be-transmitted data of the memory 30 to generate a redundancy code, and append the redundancy code to the to-be-transmitted data before transmitting the data to the micro controller unit 10.

The cyclic redundancy check module 12 is configured to verify the redundancy code of the to-be-transmitted data.

The second reset module 13 is configured to send a reset signal to the memory 30 to make the memory 30 perform a reset operation when the verification of the redundancy code is abnormal.

To improve data reliability, cyclic redundancy check (CRC) is added to the communication process between the micro controller unit 10 and the memory in this embodiment.

In this embodiment, the micro controller unit 10 includes the cyclic redundancy check module 12 and the second reset module 13, and the memory 30 includes the memory cyclic redundancy check module 31. The cyclic redundancy check module 12 is configured to perform cyclic redundancy check on the first transmitted data transmitted from the memory 30 to the micro controller unit 10, thereby ensuring the accuracy of the first transmitted data. The memory cyclic redundancy check module 31 is configured to perform cyclic redundancy check on the second transmitted data transmitted from the micro controller unit 10 to the memory 30, thereby ensuring the accuracy of the second transmitted data. The second reset module 13 is configured to send a reset signal to the memory 30 to make the memory 30 perform a reset operation when the verification of the redundancy code is abnormal. Therefore, in this embodiment, the memory 30 can be reset in time when a cyclic redundancy check abnormality occurs in the communication process between the micro controller unit 10 and the memory, so as to ensure the reliability of the data read by the micro controller unit 10 from the memory 30.

In some embodiments, the micro controller unit 10 includes a second self-test module 14.

The second self-test module 14 is configured to perform fault diagnosis on the second internal function module of the micro controller unit 10.

The second reset module 13 is further configured to perform a reset operation on the faulty second internal function module when the second internal function module is faulty.

In this embodiment, the second internal function module refers to the modules configured inside the micro controller unit 10 for implementing various functions (such as the fault collection and control module, the cyclic redundancy check module, etc.).

In this embodiment, the micro controller unit 10 includes the second self-test module 14. The micro controller unit 10 performs fault diagnosis on the second internal function module of the micro controller unit 10 through the second self-test module 14. When the second internal function module is faulty, the micro controller unit 10 performs a reset operation on the faulty second internal function module through the second reset module 13, thereby ensuring the reliability of the functions of the micro controller unit 10.

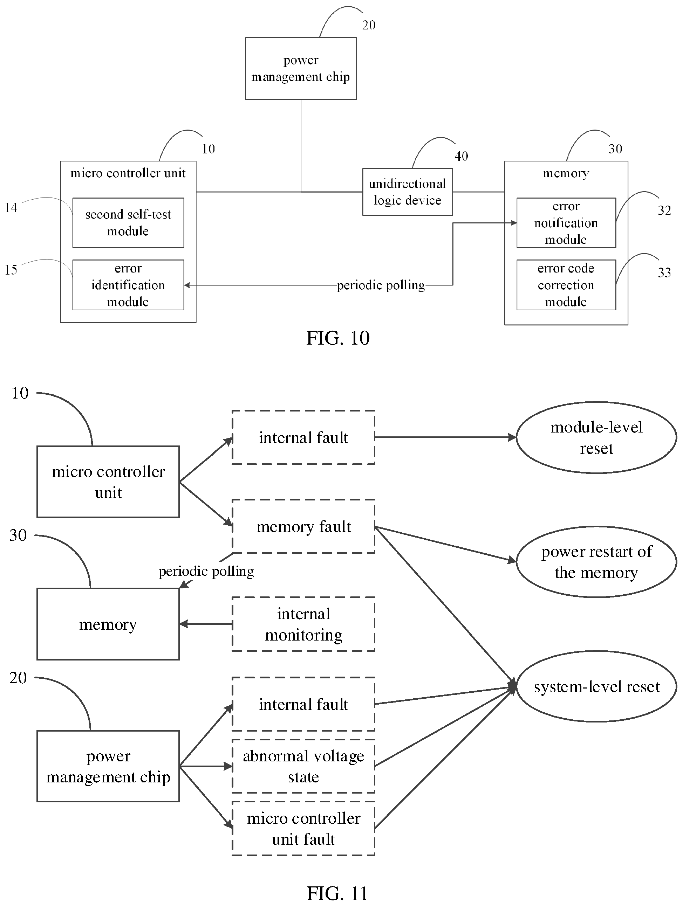

Refer to FIG. 10, which is a schematic structural diagram of the central computing platform according to a fifth embodiment of the present application.

The fifth embodiment of the present application provides a central computing platform, where the memory 30 includes an error notification module 32.

The error notification module 32 is configured to identify internal faults of the memory 30, and notify the micro controller unit 10 of the identified internal faults after the memory 30 receives a periodic polling from the micro controller unit 10.

The second reset module 13 is further configured to send a reset signal to the memory 30 after receiving the internal faults notified by the error notification module 32.

In this embodiment, the memory 30 includes the error notification module 32. The memory 30 identifies internal faults of the memory 30 through the error notification module 32, and notifies the micro controller unit 10 of the identified internal faults after the memory 30 receives a periodic polling from the micro controller unit 10. The micro controller unit 10 monitors the internal faults of the memory 30 by means of periodic polling, that is, the micro controller unit 10 sends an inquiry request to the memory 30 at regular intervals. After the memory 30 receives the inquiry request of the periodic polling, the error notification module 32 notifies the micro controller unit 10 of the identified internal faults. After the micro controller unit 10 receives the internal faults notified by the error notification module 32, the micro controller unit 10 sends a reset signal to the memory 30 through the second reset module 13 to make the memory 30 execute the reset operation. Therefore, this embodiment realizes the fault monitoring of the memory 30 by the micro controller unit 10, and ensures the reliability of the memory 30 that only complies with the lower automotive safety integrity level (i.e., the selected safety level) by virtue of the micro controller unit 10 that complies with a higher automotive safety integrity level (i.e., the target safety level).

In some embodiments, the micro controller unit 10 includes an error identification module 15.

The error identification module 15 is configured to determine whether the internal fault of the memory 30 affects the target safety level, and notify the power management chip 20 to perform a power restart on the memory 30 when the internal fault of the memory 30 does not affect the target safety level.

The second reset module 13 is further configured to send a reset signal to the memory 30 to make the memory 30 enter a safe state when the internal fault of the memory 30 affects the target safety level.

In this embodiment, the micro controller unit 10 includes the error identification module 15. The micro controller unit 10 can determine whether the internal fault of the memory 30 falls into a preset fault scenario corresponding to the target safety level through the error identification module 15, where the preset fault scenario refers to a fault scenario that has an impact on the target safety level. If the internal fault of the memory 30 does not fall into the preset fault scenario corresponding to the target safety level, it is determined that the internal fault of the memory 30 does not affect the target safety level. If the internal fault of the memory 30 falls into the preset fault scenario corresponding to the target safety level, it is determined that the internal fault of the memory 30 affects the target safety level. When the internal fault of the memory 30 does not affect the target safety level, the error identification module 15 notifies the power management chip 20 to perform a power restart on the memory 30, so as to restart the memory 30 and attempt to recover the internal fault of the memory 30. When the internal fault of the memory 30 affects the target safety level, the micro controller unit 10 can send a reset signal to the memory 30 through the second reset module 13 to make the memory 30 enter a safe state, avoiding the impact of the internal fault of the memory 30 on the overall automotive safety integrity level of the central computing platform.

In some embodiments, the memory 30 further includes an error code correction module 33.

The error code correction module 33 is configured to perform error code detection and correction on the received data and transmitted data of the memory 30.

In this embodiment, the received data refers to the data received by the memory 30, and the transmitted data refers to the data sent by the memory 30.

To further improve the reliability of the memory 30, the memory 30 further includes the error code correction module 33 in this embodiment. The memory 30 performs error code detection and correction on the received data and transmitted data of the memory 30 through the error code correction module 33, thereby reducing the probability of errors in the received data and transmitted data of the memory 30 and effectively improving the reliability of the memory 30.

Refer to FIG. 11, which is a schematic application scenario diagram of the central computing platform of the present application. The module-level reset in FIG. 11 refers to an operation of resetting a faulty functional module (such as an internal function module in the micro controller unit 10), and the system-level reset refers to an operation of resetting a faulty unit (such as the micro controller unit 10, the power management chip 20 or the memory 30). As shown in FIG. 11, when the micro controller unit 10 of the present application identifies an internal fault, it adopts a module-level reset to reset the faulty internal function module in the micro controller unit 10. The memory 30 performs internal monitoring on itself, and the micro controller unit 10 monitors the memory 30 through periodic polling. After a fault of the memory is identified, a decision is made to either perform a power restart on the memory 30 or a system-level reset according to the severity of the internal fault of the memory 30 and whether it affects the target safety level. The power management chip 20 performs a system-level reset on itself when an internal fault or an abnormal voltage state occurs, and performs a system-level reset on both the micro controller unit 10 and the memory 30 when the micro controller unit is faulty.

As shown in FIG. 5, which is the schematic device structure diagram of the hardware operating environment involved in embodiments of the present application.

The vehicle control device may be a vehicle control unit (VCU), a micro-controller unit (MCU), a personal computer (PC), a tablet computer, a portable computer, a server or other devices.

As shown in FIG. 5, the vehicle control device may include: a processor 1001, such as a central processing unit (CPU), a communication bus 1002, a user interface 1003, a network interface 1004, and a memory 1005. The communication bus 1002 is configured to realize connection and communication between these components. The user interface 1003 may include a display screen and an input unit such as a keyboard, and the user interface 1003 may also include a standard wired interface and a wireless interface. In an embodiment, the network interface 1004 may include a standard wired interface and a wireless interface (such as a Wireless-Fidelity (WI-FI) interface). The memory 1005 may be a high-speed random access memory (RAM) or a stable non-volatile memory (NVM), such as a disk memory. In an embodiment, the memory 1005 may also be a storage device independent of the aforementioned processor 1001.

Those skilled in the art can understand that the device structure shown in FIG. 5 does not constitute a limitation on the vehicle control device, and the device may include more or fewer components than those shown in the figure, or combine some components, or adopt different component arrangements.

As shown in FIG. 5, the memory 1005, as a computer storage medium, may include an operating system, a network communication module, a user interface module and a computer program.

In the device shown in FIG. 5, the network interface 1004 is mainly used to connect to a background server and perform data communication with the background server. The user interface 1003 is mainly used to connect to a client and perform data communication with the client. The processor 1001 may be used to call the computer program stored in the memory 1005 to implement the operations in the vehicle control method provided in the above embodiments.

In addition, the embodiment of the present application also provides a computer storage medium, on which a computer program is stored. The computer program implements the operations in the vehicle control method provided in the above embodiments when executed by a processor, and the specific steps will not be repeated here.

In this document, relational terms such as first and second are only used to distinguish one entity/operation/object from another, and do not necessarily require or imply any actual such relationship or order between these entities/operations/objects. The terms "include", "comprise" or any other variants thereof are intended to cover non-exclusive inclusion, so that a process, method, article or system including a series of elements not only includes those elements, but also includes other elements not explicitly listed, or also includes inherent elements of such a process, method, article or system. Without more restrictions, an element limited by the sentence "including a..." does not exclude the existence of other identical elements in the process, method, article or system including the element.

As for the device embodiments, since they are basically similar to the method embodiments, the description is relatively simple, and for relevant parts, reference may be made to the partial description of the method embodiments. The device embodiments described above are only schematic, and the units described as separate components may or may not be physically separated. Some or all of the modules may be selected according to actual needs to achieve the purpose of the solution of the present application. Those skilled in the art can understand and implement it without creative efforts.

The serial numbers of the embodiments of the present application are only for description, and do not represent the advantages or disadvantages of the embodiments.

Through the description of the above implementation manners, those skilled in the art can clearly understand that the methods of the above embodiments can be implemented by means of software plus a necessary general hardware platform, and of course also by hardware, but in many cases the former is a better implementation manner. Based on such understanding, the technical solution of the present application, in essence or the part that contributes to the prior art, can be embodied in the form of a software product, which is stored in a storage medium (such as ROM/RAM, magnetic disk, optical disc) as mentioned above, and includes several instructions to make a terminal device (which may be a mobile phone, a computer, a server, a television, a network device, etc.) execute the methods described in the various embodiments of the present application.

The above are only some embodiments of the present application, and do not limit the scope of the present application in any way. Any equivalent structural or equivalent process transformation made by using the contents of the specification and drawings of the present application, or direct or indirect application in other related technical fields, is similarly included in the scope of the present application.

## Claims

1. A vehicle control method applied to a central computing platform, **characterized in that** the vehicle control method comprises the following steps:
after receiving a start instruction, acquiring a current power mode and historical vehicle data of a target vehicle, wherein the historical vehicle data comprises a historical power mode of a last power-off;
determining whether the current power mode and the historical power mode are idle power modes, wherein the idle power mode is a power mode entered after executing a preset normal power-off process; and
controlling the target vehicle to start in response to that both the current power mode and the historical power mode are the idle power modes.

2. The vehicle control method according to claim 1, wherein after the step of determining whether the current power mode and the historical power mode are the idle power modes, the method comprises:
performing fault diagnosis according to the historical vehicle data to obtain fault information of vehicle faults in response to that the historical power mode is not the idle power mode; and
outputting corresponding prompt information according to the fault information.

3. The vehicle control method according to claim 2, wherein before the step of performing fault diagnosis according to the historical vehicle data to obtain fault information of vehicle faults, the method comprises:
acquiring historical check data of the historical vehicle data; and
verifying the historical check data based on a preset check algorithm, and executing the step of performing fault diagnosis according to the historical vehicle data to obtain fault information of vehicle faults after the verification is passed.

4. The vehicle control method according to claim 2, wherein after the step of performing fault diagnosis according to the historical vehicle data to obtain fault information of vehicle faults, the method comprises:
determining whether the vehicle faults affect a driving safety of the target vehicle according to the fault information; and
controlling the target vehicle to cancel starting in response to that the vehicle faults affect the driving safety of the target vehicle.

5. The vehicle control method according to claim 1, wherein after the step of controlling the target vehicle to start, the method comprises:
in response to a vehicle control request, controlling the target vehicle to perform power mode conversion and recording corresponding mode conversion data;
monitoring a vehicle state of the target vehicle during driving, and collecting fault-related data of the target vehicle in response to that the vehicle state is abnormal with faults; and
taking the mode conversion data and the fault-related data as current vehicle data of a current driving cycle.

6. The vehicle control method according to claim 5, wherein the step of in response to the vehicle control request, controlling the target vehicle to perform power mode conversion and recording corresponding mode conversion data comprises:
controlling the target vehicle to convert from a driving power mode to a normal power mode after receiving a stop request;
controlling the target vehicle to convert from the normal power mode to the idle power mode to enter a parking state after receiving a parking request, and recording a real-time power mode of the target vehicle and parking state data in the parking state; and
taking the real-time power mode of the target vehicle and the parking state data as the mode conversion data.

7. The vehicle control method according to claim 6, wherein before the step of taking the real-time power mode of the target vehicle and the parking state data as the mode conversion data, the method comprises:
processing the parking state data based on a preset check algorithm to obtain check data, and appending the check data after the parking state data; and
taking the real-time power mode of the target vehicle and the parking state data appended with the check data as the mode conversion data.

8. The vehicle control method according to any one claims 1 to 7, wherein before the step of controlling the target vehicle to start, the method comprises:
performing a self-test on the target vehicle to obtain a vehicle self-test result; and
executing the step of controlling the target vehicle to start in response to that the vehicle self-test result is passed.

9. A central computing platform, **characterized by** comprising a micro controller unit, a power management chip and a memory;
wherein the power management chip is electrically connected to the micro controller unit; and
the power management chip and the micro controller unit are respectively electrically connected to a unidirectional logic device, the unidirectional logic device is connected to the memory, and the unidirectional logic device is configured to prevent a reset signal of the memory from being transmitted to the power management chip and the micro controller unit.

10. The central computing platform according to claim 9, wherein the power management chip comprises a watchdog module and a first reset module;
the watchdog module is configured to monitor a program flow of the micro controller unit; and
the first reset module is configured to send the reset signal to the micro controller unit and the memory in response to that the program flow of the micro controller unit is abnormal.

11. The central computing platform according to claim 10, wherein the micro controller unit comprises a fault collection and control module, and the power management chip comprises a fault monitoring module;
the fault monitoring module is configured to monitor a fault signal output by the fault collection and control module; and
the first reset module is further configured to send the reset signal to the micro controller unit in response to that the fault signal is abnormal.

12. The central computing platform according to claim 10, wherein the power management chip comprises a first power supply, a second power supply and an output power monitoring module;
the first power supply is electrically connected to the micro controller unit, and the second power supply is electrically connected to the memory;
the output power monitoring module is configured to monitor voltage states of the first power supply and the second power supply; and
the first reset module is further configured to perform a reset operation on the power management chip in response to that the voltage states are abnormal.

13. The central computing platform according to claim 10, wherein the power management chip comprises a first self-test module;
the first self-test module is configured to perform fault diagnosis on a first internal function module of the power management chip; and
the first reset module is further configured to perform a reset operation on the power management chip in response to that the first internal function module is faulty.

14. The central computing platform according to claim 9, wherein the micro controller unit comprises a cyclic redundancy check module and a second reset module, and the memory comprises a memory cyclic redundancy check module;
the memory cyclic redundancy check module is configured to perform cyclic redundancy check encoding on to-be-transmitted data of the memory to generate a redundancy code, append the redundancy code after the to-be-transmitted data, and transmit to the micro controller unit;
the cyclic redundancy check module is configured to verify the redundancy code of the to-be-transmitted data; and
the second reset module is configured to send the reset signal to the memory to enable the memory to perform a reset operation in response to that the verification of the redundancy code is abnormal.

15. The central computing platform according to claim 14, wherein the micro controller unit comprises a second self-test module;
the second self-test module is configured to perform fault diagnosis on a second internal function module of the micro controller unit; and
the second reset module is further configured to perform a reset operation on a faulty second internal function module in response to that the second internal function module is faulty.

16. The central computing platform according to claim 14, wherein the memory comprises an error notification module;
the error notification module is configured to identify an internal fault of the memory, and notify the micro controller unit of the identified internal fault after the memory receives a periodic polling from the micro controller unit; and
the second reset module is further configured to send the reset signal to the memory after receiving the internal fault notified by the error notification module.

17. The central computing platform according to claim 16, wherein the micro controller unit comprises an error identification module;
the error identification module is configured to determine whether the internal fault of the memory affects a target safety level, and notify the power management chip to perform a power restart on the memory in response to that the internal fault does not affect the target safety level; and
the second reset module is further configured to send the reset signal to the memory to enable the memory to enter a safe state in response to that the internal fault affects the target safety level.

18. The central computing platform according to claim 9, wherein the memory further comprises an error code correction module; and
the error code correction module is configured to perform error code detection and correction on received data and transmitted data of the memory.

19. A vehicle control device, **characterized by** comprising a memory and a processor, wherein the memory stores a computer program runnable on the processor, and the computer program, when executed by the processor, implements the steps of the vehicle control method according to any one of claims 1 to 8.

20. A computer-readable storage medium, **characterized by** storing a computer program, wherein the computer program, when executed by a processor, implements the steps of the vehicle control method according to any one of claims 1 to 8.
